Europäisches Patentamt

European Patent Office

Office européen des brevets

(11) Numéro de publication: **0 402 218**
**A1**

## (12) DEMANDE DE BREVET EUROPEEN

(21) Numéro de dépôt: **90401494.1**

(22) Date de dépôt: **01.06.90**

(51) Int. Cl.⁵: **A21D 8/06, A21D 15/00, B65D 81/34**

(30) Priorité: **08.06.89 FR 8907606**

(43) Date de publication de la demande:
**12.12.90 Bulletin 90/50**

(84) Etats contractants désignés:
**AT BE CH DE DK ES FR GB GR IT LI LU NL SE**

(71) Demandeur: **GRINGOIRE-BROSSARD S.A.**
**14 avenue de la République**
**F-45311 Pithiviers(FR)**

(72) Inventeur: **Lucas, André**
**16 route d'Yèvre le Chatel Dadonville**
**F-45300 Pithiviers(FR)**
Inventeur: **Rouge, Daniel**
**7 rue de Pithiviers le Vieil**
**F-45300 Pithiviers(FR)**

(74) Mandataire: **Kügele, Bernhard et al**
**NOVAPAT FRANCE 63 bis, boulevard**
**Bessières**
**F-75017 Paris(FR)**

(54) Procédé de préparation de gâteau conditionné et gâteau conditionné préparé selon ce procédé.

(57) La présente invention concerne un procédé de préparation de gâteau conditionné consistant à emballer de façon non hermétique la pâte à gâteau dans au moins une feuille (2) d'un matériau résistant à une température maximum de 300° C, puis à cuire la pâte à gâteau ainsi emballée. La présente invention concerne également le gâteau conditionné préparé selon ce procédé

FIG. 1

EP 0 402 218 A1

## PROCEDE DE PREPARATION DE GATEAU CONDITIONNE ET GATEAU CONDITIONNE PREPARE SELON CE PROCEDE.

La présente invention a pour objet un procédé de préparation d'un gâteau conditionné, ainsi qu'un gâteau conditionné préparé selon ce procédé.

Le besoin se fait sentir au niveau des consommateurs de disposer de gâteaux pré-cuits aptes à être consommés sans préparation préalable et présentant des qualités satisfaisantes tant au niveau du goût que du moelleux.

Les gâteaux pré-cuits sont préparés de façon industrielle à partir de pâte à gâteau éventuellement moulée, cuite au four et stérilisée avant d'être conditionnée dans un emballage assurant la conservation dudit gâteau. Outre les difficultés opérationnelles de ces chaînes de production, se posent les problèmes de stérilisation de la pâte et de recontamination du gâteau à sa sortie du four avant son conditionnement. Pour remédier à ces problèmes le processus de préparation doit comprendre une ou plusieurs étapes de stérilisation ou de décontamination.

Ainsi le brevet australien N° 540 052 décrit une méthode d'emballage d'aliments cuits consistant à cuire les aliments dans une feuille d'emballage munie d'ouvertures, puis après refroidissement, à fermer les dites ouvertures et chauffer l'eballage ainsi scellé pour pasteuriser son contenu.

La présente invention a précisément pour but de proposer un procédé de préparation d'un gâteau conditionné ne nécessitant pas l'utilisation d'un emballage perforé et évitant donc une recontamination dudit gâteau à sa sortie du four, tout en lui assurant un bon moelleux; ledit procédé étant donc susceptible d'augmenter les cadences de production.

A cet effet, le procédé selon l'invention est caractérisé en ce que l'on dispose la pâte à gâteau sur au moins une feuille d'un matériau résistant à une température d'au plus 300° C, puis que l'on emprisonne de manière non hermatique la pâte dans lesdites feuilles et que l'on cuit la pâte ainsi emballée.

La pâte à gâteau et le gâteau, après cuisson, sont protégés des contaminations par la feuille d'emballage.

L'emprisonnement, non hermétique de la pâte à gâteau, permet à la vapeur d'eau formée au cours de la cuisson de s'échapper afin d'éviter la réhumidification du gâteau après ladite cuisson tout en assurant une étanchéité contre une recontamination extérieure.

Selon une forme de mise en oeuvre préférée de l'invention, la pâte à gâteau est emprisonnée, de manière non hermétique, dans une feuille de papier aluminium puis l'ensemble est cuit au four.

Selon une forme de mise en oeuvre préférée de l'invention, la pâte à gâteau est déposée sur une feuille d'aluminium, puis ladite feuille est roulée autour de la pâte de façon à former un cylindre dont une extrémité au moins est repliée non hermétiquement, l'ensemble étant cuit au four.

Avantageusement, la pâte à gâteau est déposée sur une feuille d'aluminium, puis ladite feuille est roulée autour de la pâte de façon à former un cylindre dont les deux extrémités sont repliées pour former une papillote. Les extrémités ainsi repliées constituent un labyrinthe empêchant l'entrée de tout recontaminant.

Selon une forme particulière de mise en oeuvre de l'invention, la cuisson de la pâte à gâteau emprisonnée dans la feuille d'aluminium est effectuée à une température comprise entre 150 et 200° C

L'invention concerne également un gâteau conditionné obtenu par le procédé précédent.

Le gâteau conditionné selon l'invention est caractérisé en ce qu'il est emprisonné de manière non hermétique dans une feuille d'aluminium ou tout autre matériau résistant à une température d'au plus 300° C disposée autour de la pâte à gâteau avant sa cuisson.

Le gâteau ainsi emprisonné est protégé d'une recontamination à sa sortie du four tout en n'étant pas réhumidifié par la vapeur d'eau formée lors de la cuisson.

Selon une forme particulière de réalisation de l'invention, le gâteau emprisonné dans une feuille d'aluminium est emballé à sa sortie du four dans un film étanche à la vapeur d'eau et à l'oxygène.

Ce film étanche à la vapeur d'eau et à l'oxygène protège le gâteau d'un dessèchement, car l'humidité dans l'emballage peut être supérieure à l'humidité extérieure, et d'une oxydation par l'oxygène.

De manière avantageuse, le film étanche à la vapeur d'eau et à l'oxygène est composé d'un matériau présentant une perméabilité à la vapeur d'eau inférieure à 5g par m2 par 24 heures à une température de 38° C et une HR de 90%, et une perméabilité à l'oxygène inférieure à 5cm3 par M2 par 24 heures à une pression d'une atmosphère, une température de 23 degré Celsius er pour une HR de 0%; à titre d'exemple d'un tel matériau on peut citer le polyéthylène téréphtalate 12 microns métallisé.

Selon une forme préférée de réalisation de l'invention, on dispose dans l'espace entre la feuille d'aluminium et le film étanche à la vapeur d'eau et à l'oxygène, au moins un sachet absorbeur d'oxygène permettant d'obtenir au bout de 12 heures environ dans l'espace entre la feuille d'aluminium et le film étanche à la vapeur d'eau et à l'oxygène, une atmosphère contenant un taux d'oxygène résiduel inférieur à 0,1%; ce qui empêche le rancissement des graisses, l'altération des pigments et limite le développement d'organismes aérobies tels que les moisissures et les bactéries.

Selon une autre forme préférée de l'invention, on emballe, après la cuisson, le gâteau emprisonné dans une feuille d'aluminium, dans un film absorbeur d'oxygène, puis l'ensemble est emballé dans un film étanche à la vapeur et à l'oxygène de façon à obtenir au bout de 12 heures environ, dans l'espace entre la feuille d'aluminium et le film étanche à la vapeur d'eau et à l'oxygène une atmosphère contenant un taux d'oxygène résiduel inférieur à 0,1%. De manière avantageuse, le film absorbeur d'oxygène et le film étanche à la vapeur d'eau et à l'oxygène sont superposés de façon à former un seul film multicouches.

De manière avantageuse, le film multicouches comporte au moins les trois couches suivantes :
- une première couche, la plus proche de la feuille d'aluminium, étanche à la vapeur d'eau et perméable à l'oxygène, présentant une perméabilité à l'oxygène supérieure à 5000cm3 par m2 et par 24 heures à une pression d'une atmosphère, une température de 23° C et pour une HR de 0% et de perméabilité à la vapeur d'eau inférieure à 20g par m2 et par 24 heures à une température de 38° C et pour une HR de 90%,
- une deuxième couche intermédiaire absorbeuse d'oxygène,
- une troisième couche étanche à la vapeur d'eau et à l'oxygène.

L'utilisation d'un film multicouches facilite le conditionnement stérile du gâteau dans un emballage le préservant de l'oxydation et du dessèchement.

Le sachet, le film ou la couche absorbeur d'oxygène peut être composé d'un matériau réducteur tel que de la poudre de fer, des oxalates, des sulfites, de la poudre de zinc.

L'invention sera mieux comprise au cours de la description qui va suivre, faite en référence aux dessins annexés dans lesquels :
- la figure 1 représente un premier mode de réalisation d'un gâteau conditionné selon l'invention,
- la figure 2 représente un second mode de réalisation d'un gâteau conditionné selon l'invention,
- la figure 3 représente un troisième mode de réalisation d'un gâteau conditionné selon l'invention.

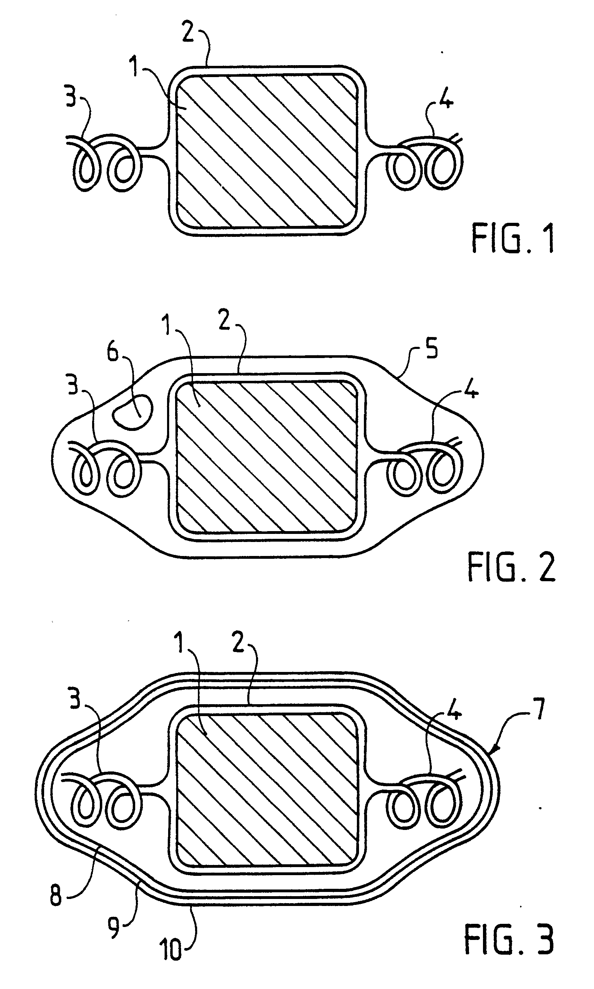

Dans la figure 1, on a représenté le gâteau 1 emprisonné dans une feuille d'aluminium 2, ladite feuille d'aluminium 2 ayant été roulée autour de la pâte à gâteau avant la cuisson de façon à former un cylindre dont les deux extrémités 3 et 4 ont été repliées non hermétiquement, la pâte à gâteau et le gâteau ainsi emballés se présentent sous la forme d'une papillote.

Dans la figure 2, on a représenté un gâteau 1 emprisonné dans une feuille d'aluminium 2, comme montré à la figure 1, l'ensemble étant emballé après la cuisson dans un film étanche à la vapeur d'eau et à l'oxygène 5; un sachet 6 composé d'un matériau absorbeur d'oxygène est disposé dans l'espace entre ledit film 5 et la feuille d'aluminium 2.

Dans la figure 3, on a représenté un gâteau 1 emprisonné dans une feuille d'aluminium 2, comme montré à la figure 1, l'ensemble étant emballé dans un film multicouches 7 comprenant :
- une première couche 8 étanche à la vapeur d'eau et perméable à l'oxygène, d'une épaisseur de 25 microns et qui est constituée de polyéthylène basse densité,
- une deuxième couche intermédiaire 9 absorbeuse d'oxygène constituée de particules de fer,
- une troisième couche 10 étanche à la vapeur d'eau et à l'oxygène, d'une épaisseur de 12 microns constituée d'une couche polyéthylène téréphtalate d'une épaisseur de 12 microns, d'une couche de copolymères statiques d'éthylène et d'alcool vinylique d'une épaisseur de 15 microns et d'une couche de polypropylène cast d'une épaisseur de 30 microns.

Le gâteau conditionné représenté à la figure 3 est préparé selon le procédé de l'invention suivant :

La pâte à gâteau est déposée par portions, de dimensions constantes, sur du papier d'aluminium recouvrant un tapis roulant, le papier d'aluminium est soit prédécoupé, soit coupé après le dépôt de la portion de façon à ce que chaque portion soit disposée sur une feuille d'aluminium 2. Un système de fermeture situé sur le tapis, roule la feuille d'aluminium autour de la pâte à gâteau et replie les extrémités de façon à former une papillote, la papillote passe alors dans un four chauffé à une température d'environ 200° C; en sortie du four, la gâteau 1 en papillote est emballé dans le film multicouches 7.

Le procédé de préparation d'un gâteau conditionné, selon l'invention, permet de protéger efficacement le gâteau d'une contamination en sa sortie du four, ce qui évite d'avoir recours à une étape supplémentaire de décontamination; le gâteau précuit conserve toutes ses qualités et les cadences de production peuvent être augmentées

La présente invention a été décrite au moyen d'exemples de réalisation sans pour autant être limitée à la forme particulière de ces exemples. De nombreuses modifications peuvent être envisagées qui apparaîtront à l'homme du métier sans sortir de l'étendue de l'invention.

**Revendications**

**1** - Procédé de préparation d'un gâteau conditionné, caractérisé en ce que l'on dispose la pâte à gâteau sur au moins une feuille (2) d'un matériau résistant à une température d'au plus de 300° C, puis que l'on emprisonne de manière non hermatique la pâte dans lesdites feuilles et que l'on cuit la pâte ainsi emballée.

**2** - Procédé de préparation d'un gâteau conditionné selon la revendication 1, caractérisé en ce que la pâte est emballée dans une feuille d'aluminium (2).

**3** - Procédé de préparation d'un gâteau conditionné selon l'une quelconque des revendications 1 ou 2, caractérisé en ce que la pâte est déposée sur une feuille d'aluminium (2), puis roulée dans ladite feuille d'aluminium de façon à former un cylindre dont une extrémité (3, 4) au moins est repliée de manière non hermétique.

**4** - Procédé de préparation d'un gâteau conditionné selon l'une quelconque des revendications 1 à 3, caractérisé en ce que la cuisson est effectuée à une température comprise entre 150 et 200° C.

**5** - Gâteau conditionné, caractérisé en ce qu'il est emprisonné de manière non hermétique dans une feuille d'aluminium (2) disposée autour de la pâte avant sa cuisson.

**6** - Gâteau conditionné selon la revendication 5, caractérisé en ce qu'après la cuisson le gâteau emprisonné dans une feuille d'aluminium (2) est emballé dans un film étanche à la vapeur d'eau er à l'oxygène (5).

**7** - Gâteau conditionné selon la revendication 6, caractérisé en ce qu'après la cuisson le gâteau emprisonné dans une feuille d'aluminium (2) est emballé dans un film étanche à la vapeur d'eau et à l'oxygène (5) constitué d'un matériau présentant une perméabilité à la vapeur d'eau inférieure à 5g par m2 et par 24 heures à une température de 38° C et pour un HR de 90% et une perméabilité à l'oxygène inférieure à 5cm3/m2/24 heures (à 1atm-23° C-HR0%).

**8** - Gâteau conditionné selon la revendication 6 ou 7, caractérisé en ce que l'on dispose dans l'espace entre la feuille d'aluminium (2) et le film (5) étanche à la vapeur d'eau et à l'oxygène au moins un sachet (6) absorbeur d'oxygène.

**9** - Gâteau conditionné selon la revendication 6 ou 7, caractérisé en ce qu'après la cuisson, le gâteau emprisonné dans une feuille d'aluminium (2) est emballé dans un film absorbeur d'oxygène, puis l'ensemble est emballé dans un film étanche à la vapeur d'eau et à l'oxygène (5).

**10** - Gâteau conditionné selon la revendication 9, caractérisé en ce que le film absorbeur d'oxygène et le film étanche à la vapeur d'eau et à l'oxygène (5) sont superposés dans un seul film multicouches.

**11** - Gâteau conditionné selon la revendication 10, caractérisé en ce qu'après la cuisson, ledit gâteau emprisonné dans une feuille d'aluminium (2) est emballé dans un film multicouches (7) constitué au moins par les trois couches suivantes :
- une couche étanche à la vapeur d'eau et perméable à l'oxygène (8),
- une couche absorbeuse d'oxygène (9),
- une couche étanche à la vapeur d'eau et à l'oxygène (10).

**12** - Gâteau conditionné selon les revendications 8 à 11, caractérisé en ce que la couche, le film ou le sachet absorbeur d'oxygène est composé d'un matériau réducteur tel que des particules de fer.

EP 0 402 218 A1

FIG. 1

FIG. 2

FIG. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | AU-B- 540 052 (UNILEVER PLC) <br> * Document entier * | 1-8 | A 21 D 8/06 <br> A 21 D 15/00 <br> B 65 D 81/34 |
| Y | | 9-13 | |
| | --- | | |
| Y | CHEMICAL ABSTRACTS, vol. 91, no. 3, juillet 1979, page 498, résumé no. 18612q, Columbus, Ohio, US; & JP-A-78 14 185 (MITSUBISHI GAS CHEMICAL CO., INC.) 08-02-1978 <br> * Abstract * | 9-13 | |
| | --- | | |
| A | US-A-2 902 371 (M. SHORR) <br> * Document entier * | 2-4,6-8 ,12 | |
| | --- | | |
| A | EP-A-0 204 324 (IDEMITSU PETROCHEMICAL CO., LTD) <br> * Page 3, alinéa 2 - page 6, alinéa 3; page 8, alinéas 1-2; revendications 1-4,16,17 * | 10-12 | |
| | ----- | | |

**DOMAINES TECHNIQUES RECHERCHES (Int. Cl.5)**

A 21 D
B 65 D
B 32 B

Le présent rapport a été établi pour toutes les revendications

| Lieu de la recherche | Date d'achèvement de la recherche | Examinateur |
|---|---|---|
| LA HAYE | 25-07-1990 | GROENENDIJK M.S.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)